# EUROPEAN PATENT APPLICATION

(11) **EP 4 851 231 A1**
(43) Date of publication of application: **09.12.2026**
(21) Application number: 25180378.9
(22) Date of filing: 03.06.2025
(51) Int. Cl.: C08J 5/04, C08F 222/08, C08K 3/013, C08K 3/26, C08K 7/14, C08L 25/08, C08L 35/06

(54) **RECYCLABLE SMC-BMC COMPOSITES BASED ON SMA/SMI MIXTURES**

(71) Applicant: Trinseo Europe GmbH, 8808 Pfäffikon (CH)
(72) Inventor: BOUQUET, Gilbert, 8808 Pfäffikon (SZ) (CH); WANG, Hao, 8808 Pfäffikon (SZ) (CH)
(74) Representative: Hoffmann Eitle

(57) **Abstract**

The present invention relates to a fiber composite material, a method for obtaining the fiber composite material, and to the use of a styrene maleic anhydride and/or at least partially imidized styrene maleic anhydride copolymer to produce a sheet molding compound or a bulk molding compound. The fiber composite material comprises: (a) a styrene-maleic anhydride copolymer (SMA) and/or at least partially imidized SMA copolymer (SMI), and (b) a fiber material, wherein the fiber composite material is a sheet molding compound (SMC) or a bulk molding compound (BMC).

## Description

### 1 Technical field

The present invention relates to a fiber composite material, a method of preparing the fiber composite material, and to the use of a styrene maleic anhydride and/or at least partially imidized styrene maleic anhydride copolymer to produce a fiber composite material, wherein the fiber composite material is a sheet molding compound or a bulk molding compound.

### 2 Background art

Fiber-reinforced polymers or plastics typically have a high strength-to-weight ratio compared to the pristine polymer, making them useful composites for structural applications. Typically, fiber-reinforced composites are prepared from thermoset polymers which have a high glass transition temperature (Tg) and a high temperature resistance. However, such systems are not recyclable due to the high level of crosslinking in a thermoset polymer.

Fiber-reinforced composites based on thermoplastic polymers, on the other hand, can be recyclable. However, they generally have a lower thermomechanical stability.

Meanwhile, fiber-reinforced materials in the form of sheet molding compounds (SMCs) and bulk molding compounds (BMCs) are molding compounds used in the production of molded components for various industrial applications. Both SMCs and BMCs are generally based on thermosetting resins, such as unsaturated polyesters and vinyl ester resins, and reinforcing fibers such as glass fibers. As mentioned above, such systems based on thermosetting resins are usually not recyclable.

### 3 Problem to be solved

The present invention aims at bridging the gap between the need for high thermomechanical properties, which can be achieved by SMCs and BMCs, and the demand for recyclable materials for industrial applications.

Accordingly, the present invention is directed towards fiber composite material, which is a sheet or bulk molding compound, having high thermomechanical resistance, strong mechanical performance, and which is simultaneously recyclable.

### 4 Summary of the invention

The present invention solves the problems of the prior art by the following means.

In a first aspect, the present invention relates to a fiber composite material comprising:
(a) a styrene-maleic anhydride copolymer (SMA) and/or at least partially imidized SMA copolymer (SMI), and
(b) a fiber material,
wherein the fiber composite material is a sheet molding compound (SMC) or a bulk molding compound (BMC).

In a second aspect, the present invention relates to a method for obtaining a fiber composite material as described above, the method comprising the steps of:
(i) providing a resin paste containing (a) the SMA and/or SMI copolymer and styrene;
(ii) providing a fiber material (b); and
(iii) obtaining a molding compound comprising (a) and (b) by a sheet molding compound process or by a bulk molding compound process.

In a third aspect, the present invention concerns the use of a styrene-maleic anhydride copolymer (SMA) and/or at least partially imidized SMA copolymer (SMI) to produce a fiber composite material, wherein the fiber composite material is a sheet molding compound or a bulk molding compound.

### 5 Brief description of the drawings

- **Figure 1**: is a schematic illustration of a SMC process that can be used for the manufacture of the SMC according to the present invention.
- **Figure 2**: is a schematic illustration of a BMC process that can be used for the manufacture of the BMC according to the present invention.
- **Figure 3**: Exemplary molded article obtained in the example.

### 6 Detailed description of the invention

### 6.1 Fiber composite material

In a first aspect, the present invention relates to a fiber composite material comprising:
(a) a styrene-maleic anhydride copolymer (SMA) and/or at least partially imidized SMA copolymer (SMI), and
(b) a fiber material,
wherein the fiber composite material is a sheet molding compound (SMC) or a bulk molding compound (BMC).

The term "fiber composite material" as used herein refers to a composite material that can be further processed by various molding techniques, for example by compression molding and/or by injection molding, to obtain a molded article.

Further, the term "fiber composite material" refers to a composite material comprising reinforcing fibers incorporated in a matrix of polymeric material. For example, the matrix of polymeric material may form a continuous phase in which the fibers are dispersed.

In the present invention, the terms "fiber composite material" and "molding compound" may be used interchangeably. In the present invention, the fiber composite material or molding compound may be a sheet molding compound or a bulk molding compound as defined below.

The present inventors have found that current SMC and BMC formulations, which are usually based on thermosets such as polyester and styrene monomer, vinyl ester, epoxy and polyurethane, can be replaced by a styrene-maleic anhydride copolymer (SMA) and/or at least partially imidized SMA copolymer (SMI). This formulation results in a thermoplastic matrix.

Moreover, crosslinkers may be added to the component (a) of the formulation and used to prepare a covalently adapted network as described below.

Moreover, maleic anhydride (MA) comonomer may be further added, thus increasing the polarity of the mixture, reducing the viscosity and increasing the heat resistance of the resulting polymer matrix.

The thus obtained fiber composite materials are recyclable, in addition to having advantageous thermomechanical resistance and strong mechanical performance.

Accordingly, the present invention bridges the gap between the favorable properties of SMC and BMC compounds, which are useful for the manufacture of various articles having excellent physical properties such as mechanical and heat resistance performance, and the need for materials having such properties while being at the same time recyclable.

### 6.1.1 Sheet molding compound

In some embodiments, the fiber composite material is a sheet molding compound (SMC). The term "sheet molding compound" is understood with its general meaning in the art and refers to a molding compound in the shape of a sheet. The sheet molding compound may be obtainable by a sheet molding process.

For example, the sheet molding compound may be obtainable by a sheet molding compound technique comprising:
(i) providing a resin paste containing (a) the SMA and/or SMI copolymer and styrene;
(ii) applying the resin paste onto a first carrier film;
(iii) applying the resin paste onto a second carrier film;
(iv) applying the fiber material (b) onto the resin paste applied onto the first carrier film in step (ii); and
(v) contacting the resin paste and fiber material applied onto the first carrier film and the resin paste applied onto the second carrier film, thereby forming a fiber composite material between the first and the second carrier film.

In some embodiments, the sheet molding compound is obtainable by the process described in section 6.3 below.

In some embodiments, the present invention is directed to a B-stage material which comprises the fiber composite material, wherein the fiber composite material is a sheet molding compound. The B-stage material further comprises a first carrier film and a second carrier film, wherein the fiber composite material is present between the first and the second carrier film.

The first and second carrier films may each independently be made of polyethylene, polypropylene and/or polyester. The first and second carrier films may each independently have a thickness of 20 µm to 1000 µm, preferably 25 µm to 500 µm. Further, the first and second carrier films may each independently have a width of 100 mm to 3000 mm, preferably 250 mm to 2500 mm.

The fiber composite material in the sheet molding compound may have a thickness of 0.1 mm or more, 0.5 mm or more, 1.0 mm or more, 1.5 mm or more, 2.0 mm or more, or 3.0 mm or more, and 15 mm or less, 13 mm or less, 10 mm or less, or 8 mm or less. The fiber composite material in the sheet molding compound may have a width of 100 mm to 3000 mm, preferably 250 mm to 2500 mm. These thickness and width values may apply to the sheet molding compound both in the presence and in the absence of the carrier films.

The B-stage material may be further processed by removing the first and the second carrier films before processing the sheet molding compound by molding (for example, before processing by compression molding). That is, the B-stage material is an intermediate product that may be used at a later stage to obtain a molded article. The advantage of the B-stage material is that it may be processed at a different location than that of production of the sheet molding compound.

In the B-stage material, the carrier films may have the following roles. They may (i) allow transportation of the B-stage material during manufacturing, and/or (ii) protect the fiber composite material from external factors such as pollution and contamination, and/or (iii) reduce the evaporation of styrene which is present in the resin paste used to form the fiber composite material, and/or (iv) prevent moisture to affect the fiber composite material during storage at low temperature.

### 6.1.2 Bulk molding compound

In some embodiments, the fiber composite material is a bulk molding compound. The term "bulk molding compound" is understood with its general meaning in the art and refers to a molding compound obtainable by a bulk molding process. It may be referred to also as "dough molding compound" (DMC).

For example, the bulk molding compound may be obtainable by a bulk molding compound technique comprising
(i) providing a resin paste containing (a) the SMA and/or SMI copolymer and styrene;
(ii) mixing the resin paste with the fiber material (b) with a stirrer or with a kneader, thereby obtaining a bulk molding compound.

In some embodiments, the bulk molding compound is obtainable by the process described in section 6.3 below.

The bulk molding compound may be provided with different shapes and sizes depending on the envisaged applications. For example, it may be provided in bulk having a dough-like form or in the form of a log or in the form of a rope.

In one embodiment, the bulk molding compound has the form of a log having a diameter of 20 mm or more, 30 mm or more, or 50 mm or more, and 200 mm or less, or 150 mm or less.

In one embodiment, the bulk molding compound has the form of a rope having a diameter of 20 mm or more, 25 mm or more, and 60 mm or less, or 50 mm or less.

### 6.1.3 Styrene-maleic anhydride copolymer (SMA) and/or at least partially imidized SMA compolymer (SMI)

In the present invention, the fiber composite material contains (a) a styrene-maleic anhydride copolymer (SMA) and/or at least partially imidized SMA copolymer (SMI).

### a) Definitions

The term "copolymer" as used herein has its customary meaning as used in the art. The following description is merely for illustrative purposes. Copolymer chains comprise units of at least two comonomers. The term "monomer" as used herein describes a molecule of a first type that is able to undergo polymerization with other molecules. Said other molecules may be other molecules of the first type, molecules of a second type and optionally further types, or molecules of the first, second and optionally further types. Having undergone polymerization and being incorporated into the polymer chain, the term "unit of monomer" refers to the chemical unit in the polymer which corresponds to the previous monomer. The units of monomers may also be described as "repeating units".

If molecules of the first type only undergo polymerization with other molecules of the first type, then only one monomer is present, which may also be referred to as a homomonomer. Homomonomers polymerize to form homopolymers consisting of units of homomonomers. The broader term "monomer" includes homomonomers. For instance, a monomer being a molecule "A" may polymerize to form a polymer "[...]-A-A-A-A-[...]", which in turn consists of units of monomers "-A-". For instance, ethylene molecules (=monomers) may polymerize to form polyethylene (=polymer), which in turn consists of ethylene units (=units of monomer).

If the molecules of the first type undergo polymerization with molecules of the second type and optionally further types, then the molecules of the first, second and optionally further types are comonomers respectively. Comonomers polymerize to form copolymers consisting of units of comonomers. The broader term "monomer" includes comonomers. For instance, a comonomer being a molecule "A" may polymerize with a comonomer being a molecule "B" to form a copolymer "[...]-A-B-A-A-[...]", which in turn consists of units of comonomers "-A-" and "-B-".

If the molecules of the first type (comonomers "A") only polymerize with molecules of the second type (comonomers "B") and optionally other molecules "A", then two comonomers are present and a binary copolymer is formed. If the molecules of the first type (comonomers "A") polymerize with molecules of a second type (comonomers "B") and molecules of a further type (comonomers "C") and optionally other molecules "A", then three comonomers are present and a ternary copolymer (=terpolymer) is formed.

The term "copolymer" includes any type of sequence of units of comonomers in the polymer chains, such as random copolymers with a random sequence (e.g. "[...]-A-B-A-A-A-B-[...]"), block copolymers with blocks of identical sequences (e.g. "[...]-A-A-A-[...]-B-B-B-[...]"), and repeating copolymers with a repeating/alternating sequence (e.g. "[...]-A-B-A-B-[...]") .

In accordance with the above definitions, styrene-maleic anhydride (SMA) is a binary copolymer formed from comonomers styrene and maleic anhydride respectively, and comprising units of styrene and maleic anhydride comonomers, respectively.

The term "at least partially imidized SMA copolymer" (SMI) describes a copolymer based on SMA, wherein at least a portion of the units of maleic anhydride comonomers are imidized to be units of maleic imide comonomers, wherein the imidic N-atom may have an H attached to it or be further functionalized with a phenyl group or other organic group. As such, the term includes pure SMI copolymer which is a binary copolymer comprising units of styrene and maleic imide comonomers respectively, as well as ternary copolymers comprising units of styrene, maleic imide, and maleic anhydride comonomers respectively. For instance, in some embodiments the ratio of units of maleic imide comonomers to units of maleic anhydride monomers may be from 1:99 to 100:0. In some embodiments, the ratio of units of maleic imide comonomers to units of maleic anhydride monomers may be from 5:95 to 20:80, from 20:80 to 35:65, 50:50, from 65:35 to 80:20, from 80:20 to 95:5, and/or any permutation thereof.

### b) Maleic anhydride and/or maleic imide content

In some embodiments, the SMA and/or SMI has a maleic anhydride and/or maleic imide content of the SMA and/or SMI of at least 5 wt% based on the total weight of the SMA and/or SMI.

Preferably, the maleic anhydride and/or maleic imide content is at least 10 wt%, more preferably at least 15 wt %, and even more preferably at least 20 wt%. In a particularly preferred embodiment, the maleic anhydride and/or maleic imide content is 23 wt%.

When the SMA and/or SMI has a maleic anhydride and/or maleic imide content of at least 5 wt%, the Tg of the fibre composite material can be kept relatively high thereby ensuring a high thermomechanical resistance. Particularly high Tg can be achieved when the maleic anhydride and/or maleic imide content is 23 wt%. Moreover, it is submitted that when the maleic anhydride and/or maleic imide content of the dissolved SMA and/or SMI is at least 5 wt%, the adhesion between the fibres and the polymer is particularly strong. Glass transition temperatures may be determined using differential scanning calorimetry (DSC) with a heating and cooling rate of 20 °C/min.

### c) Amount of copolymer

In one embodiment, the fiber composite material comprises at least 20 wt% of the copolymer (a), preferably at least 25 wt%, more preferably at least 30 wt% relative to the total weight of the fiber composite material. Further, the fiber composite material may comprise 80 wt% or less, preferably 70 wt% or less, preferably 60 wt% or less, even more preferably 50 wt% or less of the copolymer (a) relative to the total weight of the fiber composite material.

### d) Molecular weight of copolymer

In one embodiment, the SMA and/or SMI copolymer has a weight average molecular weight of at least 5,000 g/mol, more preferably at least 10,000 g/mol, more preferably at least 20,000 g/mol, more preferably 30,000 g/mol, more preferably at least 40,000 g/mol, more preferably 50,000 g/mol, more preferably at least 60,000 g/mol, more preferably 70,000 g/mol, more preferably at least 80,000 g/mol, more preferably 90,000 g/mol, and even more preferably at least 100,000 g/mol.

The weight average molecular weight may be measured according to using gel permeation chromatography (GPC) using narrow molecular weight polystyrene standards, preferably with a dispersity of less than 1.1, THF as a solvent and a UV or diode array detector with a typical detection wavelength of 254 nm.

### e) Covalently adapted network comprising the SMA and/or SMI copolymer

In one embodiment, the molding compound comprises (a) a covalently adaptable network comprising the SMA and/or SMI copolymer crosslinked with a crosslinking agent.

Covalently adaptable networks, also known as vitrimers, are characterized by a dynamic covalent chemistry which is commonly affected by an external stimulus, such as light, heat, etc. Typically, covalently adaptable networks behave like thermoset polymers at low temperature but become thermoplastic at high temperature due to the increasingly dynamic covalent bond formation and breaking between the cross-linked polymer chains.

The term "covalently adaptable network" as used herein, has its customary meaning as used in the art and may be taken synonymously with the term "vitrimer". As such, the term describes a polymer network with a dynamic covalent chemistry, characterized in that its topology can undergo changes when subjected to external stimuli such as heat and light.

The covalently adaptable network may be obtainable by the steps of:
(i) providing a copolymer comprising
   - units of a comonomer having reactive sites, and
   - a copolymer backbone,
(ii) providing a crosslinking agent configured to react with the reactive sites, and
(iii)contacting the crosslinking agent with the copolymer and crosslinking the copolymer to obtain the covalently adaptable network,
whereupon decrosslinking the covalently adaptable network, the copolymer backbone remains intact.

The term "reactive site" as used herein refers to a chemical moiety that is able to undergo a chemical reaction. Said chemical moiety may be a functional group or a set of functional groups. The reactive site is configured to react with the crosslinking agent as further defined below.

The term "copolymer backbone" as used herein has its customary meaning as used in the art. The following description is merely for illustrative purposes. The copolymer backbone may be understood as the chain of atoms connected through bonds to which all other chemical moieties such as functional groups may be regarded as pendant. Typically, the copolymer backbone consists of bonds between neighboring units of comonomers and the shortest chain of atoms within units of comonomers that connect those atoms in the unit of comonomer which bond to the respective neighboring unit of comonomer. In the copolymer of the present invention, the reactive sites are pendant to the copolymer backbone; that is to say, the polymer backbone does not run through the reactive sites. Rather, the reactive sites are attached to the copolymer backbone. Said attachment may include but is not limited to a bond, a plurality of bonds, or a linking group. The linear copolymer is preferably not a graft copolymer.

In step (ii) a crosslinking agent is provided which is configured to react with the reactive sites on the units of the comonomers. The crosslinking agent and the reactive sites therefore have complementary reactivity. The term "crosslinking agent" as used herein may be taken synonymously with the term "crosslinker". The term describes molecules that are able to connect individual polymer chains with each other through branched connections which may also be referred to as "crosslinks". Typically, the crosslinking agent will have at least two sites which can connect to at least two individual chains.

The reaction between the reactive site and the crosslinking agent is herein referred to as the "crosslinking reaction". The crosslinking reaction results in a bond with the crosslinking agent through the reacted site. The term "reacted site" as used herein describes the chemical moiety that is formed when the reactive site reacts with the crosslinking agent. In an exemplary embodiment, the crosslinking reaction may be described as CA + RS1 -> RS2-CA, wherein "CA" is the crosslinking agent, "RS1" is the reactive site, and "RS2-CA" describes the moiety bonded to the crosslinking agent through the reacted site.

The crosslinking reaction is reversible. In the context of the crosslinking reaction according to the present disclosure, the term "reversible" herein includes directly reversible, and reversible via an intermediate compound or a set of intermediate compounds. In an exemplary embodiment, if the forward reaction is CA + RS1 -> RS2-CA as described above, the reversible reaction may be RS2-CA -> CA + RS1, i.e. directly reversible, or RS2-CA -> I -> CA + RS1, wherein I is an intermediate or a set of intermediates.

In an exemplary embodiment, if the crosslinking agent is an alcohol and the reactive site is an anhydride, the crosslinking reaction results in the reacted site being an ester and the formation of a carboxylic acid. In this case, the reverse reaction may be a direct reformation of the anhydride, or the reverse reaction may be the reformation of the anhydride via an intermediate such as carboxylic acid.

In the present invention, the copolymer is a styrene-maleic anhydride (SMA) copolymer or an at least partially imidized SMA copolymer (SMI).

Accordingly, in the present invention, the reactive sites comprise anhydride and/or imide groups and the crosslinking agent comprises at least two nucleophilic moieties.

The term "nucleophilic moieties" as used herein has its customary meaning as used in the art and refers to functional groups with nucleophilic reactive character towards the reactive site. In the aforementioned embodiment, the nucleophilic reactive character of the nucleophilic moieties is configured to undergo an addition and/or substitution reaction at the carbonyl group of the anhydride and/or imide of the reactive sites. In the present invention, as mentioned above, the reactive sites are anhydride groups and/or imide groups.

That is, in the present invention, the units of comonomers having the reactive sites are the maleic anhydride comonomer units and/or the maleic imide comonomer units respectively. In said units of comonomers, the maleic anhydride groups and/or the maleic imide groups are the reactive sites respectively. Said reactive sites are typically configured to react with a polyol, a polyamine, a polythiol, and/or a mixed functionality crosslinking agent, preferably a polyol. Said reaction between the reactive sites and the polyol, polyamine, polythiol and/or a mixed functionality crosslinking agent is consistent with the nucleophilic substitution reaction at the carbonyl group described in further detail above.

In step (iii) the crosslinking agent is contacted with the copolymer and the copolymer is crosslinked to obtain the covalently adaptable network. Since the reactive sites are on units of comonomers of the copolymer, the reaction of the crosslinking agent with the reactive sites results in the crosslinking agent and the units of comonomers being bonded to each other through the reacted site. Different individual chains of copolymers are thus connected to each other through the crosslinking agent. Effecting said process is herein referred to as "crosslinking the copolymer", and through said process the covalently adaptable network is obtained. Since the reactive sites are pendant to the copolymer backbone, upon crosslinking the copolymer, the reacted sites are also pendant to the copolymer backbone and the copolymer backbone remains intact. That is to say, the topology of the copolymer backbone is retained upon crosslinking the copolymer. Effecting the crosslinking may be achieved simply by contacting the crosslinking agent with the copolymer, or by mixing the crosslinking agent with the copolymer, or through an external stimulus such as heating, irradiating with light, or the addition of a catalyst.

As described above, the crosslinking reaction is reversible. Said reversibility of the crosslinking reaction preferably gives rise to the dynamic covalent chemistry characterizing the covalent adaptable network. For instance, at low temperature, the position of equilibrium for the reversible crosslinking reaction may favor the static crosslinked state and the dynamic exchange of the crosslinks is inhibited. Thus, the covalently adaptable network behaves like a crosslinked thermoset polymer at low temperature as the network topology is fixed. Upon heating the covalently adaptable network, the equilibrium may favor decrosslinking and/or exchange of crosslinks through the reversible reactions. The network topology of the covalently adaptable network therefore becomes more dynamic and the material behaves like a non-crosslinked, thermoplastic polymer at high temperatures. This means that material flow is possible, unlike permanently crosslinked thermosets. Hence, upon heating the material becomes malleable, re-shapable, and weldable.

Since the copolymer backbone remains intact during the crosslinking reaction, it follows that the backbone also remains intact during the reverse reaction. Upon decrosslinking the covalently adaptable network, the copolymer backbone remains intact. That is to say, the topology of the copolymer backbone is retained upon decrosslinking. The term "decrosslinking the covalently adaptable network" as used herein refers to reactions which break the connection between the crosslinking agent and the individual chains of copolymers through the reacted site. Said reactions include but are not limited to the reverse reactions from the crosslinking reaction in which the reactive site is reformed, for instance in the set of reactions giving rise to dynamic covalent chemistry. In a preferred embodiment, upon decrosslinking the covalently adaptable network the reactive site is reformed.

Preferably, the crosslinking agent is a polyol, a polyamine, a polythiol, or an agent having mixed functionality of any of the above. This means that the crosslinking agent may be any of a mixed poly(aminoalcohol), poly(thioalcohol), poly(aminothiol), or a poly(aminothioalcohol). Most preferably, the crosslinking agent is a polyol.

For example, when the crosslinking agent is a polyol, a polyamine, a polythiol, or an agent having mixed functionality of any of the above, the crosslinking agent is able to undergo multiple nucleophilic substitution reactions at the carbonyl groups of the anhydrides and/or imides of the reactive sites on multiple individual copolymer chains. Said nucleophilic substitution reactions result in a connection between the crosslinking agent and the copolymer through the reacted site, the reacted site typically being an ester, an amide, a thioester, or any combination thereof, respectively.

In some embodiments, the polyols include but are not limited to polymeric or oligomeric diols, long chain aliphatic diols and/or fluorinated diols. In some embodiments, the polyol may be poly(tetrahydrofuran), Voranol CP-450, polycaprolactone diol, 1,12-dodecanediol, isosorbide, 2,4-diethyl-1,5-pentanediol, 2,2-diethyl-1,3-propanediol, 2-methyl-1,3-propanediol, 2-butyne-1,4-diol, ,2,3,3,4,4,5,5-octafluoro-1,6-hexanediol, 2,2,3,3-tetrafluoro-1,4-butanediol. In preferable embodiments, the polyols are short aliphatic polyols. Preferred polyols include glycerol, trimethylolpropane, 1,3-Propanediol, 1,4-butanediol, 1,5-pentanediol, 1,6-hexanediol**)**, 1,4-bis(hydroxymethyl)cyclohexane, 1,4-benzenedimethanol, 2-butyne-1,4-diol, N-methyl diethanolamine, 3,4-bis(hydroxymethyl)furan, 2,2-dibenzyl-1,3-propanediol, 3-methyl-1,5-pentanediol, 2-phenyl-1,3-propanediol, diethylene glycol, and triethylene glycol.

Preferred polyamines include but are not limited to tris(3-aminopropyl)amine, diethylenetriamine, bis(hexamethylene)triamine, tris(2-aminoethyl)amine, Priamine 1074, and aliphatic diamines, such as 1,4-diaminobutane, and 1,6-diaminohexane.

Preferred polythiols include but are not limited to, hexa(ethylene glycol)dithiol, pentaerythritol tetrakis(3-mercaptopropionate), and 1,12-dodecanethiol.

Preferred crosslinking agents having mixed functionality of any of the above include but are not limited to ethanolamino agents, such as 2-(2-aminoethoxy)ethanol or bis(2-propanol) amine.

In a preferred embodiment, the weight average molecular weight of the SMA and/or SMI is, as described above, at least 5,000 g/mol.

As described above, the weight average molecular weight may be measured using gel permeation chromatography (GPC) using narrow molecular weight polystyrene standards, preferably with a dispersity of less than 1.1, THF as a solvent and a UV or diode array detector with a typical detection wavelength of 254 nm.

Preferably, as described above, the weight average molecular weight of the SMA and/or SMI is at least 10,000 g/mol, more preferably at least 20,000 g/mol, more preferably 30,000 g/mol, more preferably at least 40,000 g/mol, more preferably 50,000 g/mol, more preferably at least 60,000 g/mol, more preferably 70,000 g/mol, more preferably at least 80,000 g/mol, more preferably 90,000 g/mol, and even more preferably at least 100,000 g/mol.

Without wishing to be bound by theory, the present inventors submit that the Tg of the covalently adaptable network may be controlled through the weight average molecular weight of the SMA and/or SMI in a manner broadly consistent with the Flory-Fox equation. A weight average molecular weight of at least 5,000 g/mol may therefore be used to used to obtain favorably high glass transition temperatures.

In a preferred embodiment, as described above, the maleic anhydride and/or maleic imide content is at least 5 wt% based on the total weight of the copolymer provided in step (i).

Preferably, the maleic anhydride (MA) and/or maleic imide (MI) content is at least 10 wt%, more preferably at least 15 wt %, and even more preferably at least 20 wt%. In a particularly preferred embodiment, the maleic anhydride and/or maleic imide content is 23 wt%.

The Tg of the covalently adaptable network may be controlled through the MA and/or MI content in the SMA and/or SMI. Generally speaking, as the MA and/or MI content in the SMA and/or SMI increases, the Tg increases as well. For a given content, MI being present in the covalently adaptable network generally yields a higher Tg than MA.

The covalently adaptable network may be characterized by the functional group ratio of maleic anhydride and/or partially imidized maleic anhydride to the crosslinking agent. The term "functional group ratio" as used herein refers to the ratio FG(MA and/or MI):FG(crosslinker)', wherein "FG(MA and/or MI)" is the total number of functional groups at the reactive sites which are configured to react with the crosslinker nucleophilic moieties in any given SMA and/or SMI provided in step (i), and wherein "FG(crosslinker)" is the total number nucleophilic functional groups in any given crosslinking agent provided in step (ii). The FG(MA and/or MI) is determined by multiplying the amount of SMA and/or SMI provided in step (i) with the maleic anhydride and/or maleic imide content of the SMA and/or SMI and converted into molar units. Likewise, the FG(crosslinker) is determined by multiplying the amount of crosslinking agent provided in step (ii) with the number of nucleophilic moieties which are configured to react with the maleic anhydride and/or maleic imide of the SMA and/or SMI per crosslinking agent molecule, and converted into molar units. Thus, the functional group ratio being lower than 1:1 means that it is (<1):1 or 1:(>1), i.e., the crosslinker is in excess. Similarly, the functional group ratio being higher than 1:1, means that it is (>1):1 or 1:(<1), i.e. the MA and/or MI is in excess.

The present inventors found that the Tg of the covalently adaptable network is affected by the functional group ratio. It is believed that when the content of crosslinking agent relative to reactive site increases, the Tg increases. However, this effect may be countered by a decrease in Tg due to the greater relative content of a lighter crosslinking agent.

In preferred embodiment, the covalently adaptable network has a glass transition temperature (Tg) of at least 130 °C.

Preferably, the glass transition temperature is at least 132 °C, more preferably at least 134 °C, more preferably at least 136 °C, more preferably at least 138 °C, more preferably at least 140 °C, more preferably at least 142 °C, more preferably at least 144 °C, more preferably at least 146 °C, more preferably at least 148 °C, more preferably at least 150 °C, more preferably at least 152 °C, more preferably at least 154 °C, more preferably at least 156 °C, more preferably at least 158 °C, and even more preferably at least 160 °C.

In a preferred embodiment n, the covalently adaptable network has a stiffness of at least 1 GPa.

The stiffness may be measured according to ISO527-4.

Preferably, the covalently adaptable network has a stiffness of at least 1.2 GPa, more preferably at least 1.4 GPa, more preferably at least 1.6 GPa, more preferably at least 1.8 GPa, more preferably at least 2.0 GPa, more preferably at least 2.2 GPa, more preferably at least 2.4 GPa, more preferably at least 2.8 GPa, more preferably at least 3.0 GPa, more preferably at least 3.2 GPa, more preferably at least 3.4 GPa, more preferably at least 3.6 GPa, more preferably at least 3.8 GPa, more preferably at least 4.0 GPa, more preferably at least 4.2 GPa, more preferably at least 4.4 GPa, more preferably at least 4.6 GPa, more preferably at least 4.8 GPa, and even more preferably at least 5.0 GPa.

In a preferred embodiment, the covalently adaptable network has a failure strain of at least 2%.

The failure strain may be measured by/according to ISO527-4.

Preferably, the failure strain is at least 3%, more preferably at least 4%, more preferably at least 5%, more preferably at least 6%, and even more preferably at least 7%. Preferably, the covalently adaptable network has a flexural failure strain of at least 2%, more preferably at least 3%, and even more preferably at least 4%, wherein the flexural failure strain is measured according to ISO 14125.

Preferably, the covalently adaptable network has a flexural strength (FS) of at least 10 MPa, more preferably at least 30 MPa, more preferably at least 40 MPa, and even more preferably at least 50 MPa. The flexural strength is measured according to ISO 14125.

Preferably, the covalently adaptable network has a flexural modulus of at least 15 GPa, more preferably at least 16 GPa, more preferably at least 17 GPa, more preferably at least 18 GPa, more preferably at least 19 GPa, more preferably at least 20 GPa, more preferably at least 21 GPa, more preferably at least 22 GPa, more preferably at least 23 GPa, more preferably at least 24 GPa, more preferably at least 25 GPa, and even more preferably at least 26 GPa. The flexural modulus is measured according to ISO 14125.

In a preferred embodiment, decrosslinking the covalently adaptable network can be effected by thermolysis or solvolysis.

Preferably, solvolysis is any of hydrolysis, aminolysis or alcoholysis, or a combination thereof. Aminolysis may be carried out using benzyl amine. Most preferably, decrosslinking the covalently adaptable network can be effected by alcoholysis.

### 6.1.4 Fiber material

The fiber composite material of the present invention further comprises (b) a fiber material.

### a) Definitions

The term "fiber material" as used herein, refers to a material substantially consisting of fibers, preferably consisting of fibers. A fiber is a material form characterized by a length and a diameter, wherein said form has a very high aspect ratio of length to diameter. Typically, fibers are flexible along their length dimension but substantially less flexible, preferably inflexible, around their diameter. The term "fiber" may be used synonymously with the term "filament".

The fiber material (b) may be a continuous fiber material or a discontinuous fiber material.

The term "continuous" as used herein, characterizes a fiber with a very high length-to-diameter aspect ratio. In one embodiment, the aspect ratio is at least 10,000, preferably at least 25,000, more preferably at least 50,000, and even more preferably at least 100,000. In one embodiment, the diameter of a continuous fiber in the continuous fiber material is between 1-200 µm.

The term "discontinuous" as used herein, characterizes a fiber with a lower length-to-diameter aspect ratio than a "continuous" fiber. In one embodiment, the aspect ratio is less than 2,000, preferably less than 1,000, and more preferably less than 500. In one embodiment, the diameter of a discontinuous fiber is between 1-200 µm.

### b) Average length of fiber material

The average length of the fiber material may be determined as a number average length, for example by using a microscope.

Generally, the average length of the fiber material may be from 0.1 mm to 150 mm, preferably from 1 mm to 50 mm.

The average length of a continuous fiber material may be 10 mm or more, 15 mm or more, 20 mm or more, 25 mm or more, or 30 mm or more, and may be 150 mm or less, 100 mm or less, 90 mm or less, 80 mm or less, or 70 mm or less.

The average length of a discontinuous fiber material may be less than 3 mm, less than 1 mm or less than 0.5 mm. Alternatively, the average length of a discontinuous fiber material may be less than 50 mm. That is, the discontinuous fiber material may have an average length of 0.1 to 1.0 mm or from 1 to 50 mm. Both types of discontinuous fibers may be aligned in one direction only or in several different directions.

In one embodiment, the fiber composite material is a SMC and the fiber material is a continuous or discontinuous fiber material. That is, when the fiber composite material is a SMC, either continuous or discontinuous fiber materials may be used. Preferably, the fiber material is a discontinuous fiber material.

Further, in one embodiment, the fiber composite material is a SMC and the fiber material is a continuous or discontinuous fiber material, preferably a discontinuous fiber material, having an average length of 10 mm or more, preferably 15 mm or more, more preferably 20 mm or more, and even more preferably 25 mm or more. Further, the average length of the fiber material may be 50 mm or less, 45 mm or less, or 40 mm or less.

In one embodiment, the fiber composite material is a BMC and the fiber material is a discontinuous fiber material.

Further, in one embodiment, the fiber composite material is a BMC and the fiber material is a discontinuous fiber material having an average length of 0.1 mm or more, 0.3 mm or more, or 0.4 mm or more. Further, the fiber material may have an average length of less than 25 mm, less than 20 mm, or less than 15 mm.

### c) Types of fiber material

In a preferred embodiment, the fiber material is a continuous and/or discontinuous fiber material, and the fiber material is any of a glass fiber material, carbon fiber material, aramid fiber material, basalt fiber material, metal fiber material, synthetic fiber material, and/or natural fiber material.

The fiber material may be in the form fabrics, such as non-woven, woven, unidirectional, continuous filament mat, chopped strand mat, and direct rovings.

The fiber material may be in the form of unidirectional fibers. In unidirectional fibers, all fibers are aligned in one direction only.

The fibers may also be fabrics, i.e. continuous fibers which are oriented in different directions relative to one another. Fabrics can be woven, non-woven or non-crimp fabrics. In a woven fabric the continuous fibers are aligned in two or more different directions to one another with undulations between the fibers such as plain weave, twill weave or 8H satin weave. A non-woven fabric comprises continuous fibers that are aligned randomly relative to one another. Non-crimp fabrics are comprised of two or more different layers of unidirectional, continuous fibers, wherein the different layers are stacked on top of one another and the unidirectional, continuous fibers of one layer are oriented at an angle to those of the adjacent layers.

In a preferred embodiment, the fiber material includes a glass fiber material. In a most preferred embodiment, the fiber material includes a discontinuous glass fiber material.

In a preferred embodiment, the fiber composite material is a sheet molding compound and the fiber material includes a discontinuous glass fiber material having an average length of 10 mm or more, preferably 20 mm or more, most preferably 25 mm or more.

In a preferred embodiment, the fiber composite material is a bulk molding compound and the fiber material includes a discontinuous glass fiber material having an average length of 30 mm or less, preferably 25 mm or less, more preferably 20 mm or less.

### d) Amount of fiber material in the fiber composite

The amount of fiber material (b) with respect to the total weight of the fiber composite material may be 5 wt% or more, preferably 10 wt% or more, more preferably 15 wt% or more, even more preferably 20 wt% or more. Further, the amount of fiber material with respect to the total weight of the fiber composite material may be 60 wt% or less, more preferably 55 or less.

In one embodiment, the fiber composite material is a sheet molding compound and the amount of fiber material (b) with respect to the total weight of the fiber composite material is 10 wt% or more, preferably 20 wt% or more, preferably 30 wt% or more, more preferably 35 wt% or more, and even more preferably 40 wt% or more. In this embodiment, the amount of fiber material (b) with respect to the total weight of the fiber composite material may be 60 wt% or less, more preferably 55 wt% or less.

In one embodiment, the fiber composite material is a bulk molding compound and the amount of fiber material (b) with respect to the total weight of the fiber composite material is 10 wt% or more, preferably 15 wt% or more, more preferably 20 wt% or more, even more preferably 25 wt% or more. Further, the amount of fiber material (b) with respect to the total weight of the fiber composite material may be 50 wt% or less, more preferably 40 wt% or less, and even more preferably 30 wt% or less, most preferably less than 30 wt%.

Without wishing to be bound by theory, the present inventors found that within the above-described content ranges of fiber material, and SMA and/or SMI and/or polystyrene and fiber material described previously, respectively, relative to the total mass of the composite, the thermomechanical and mechanical properties of the fiber composite material are particularly favorable due to the favorable ratio of binding SMA and/or SMI and/or polystyrene and strengthening fiber material.

### 6.1.5 Additional components

### a) Filler (c)

In one embodiment, the fiber composite material further comprises (c) a filler.

In one embodiment, the filler (c) comprises one or more selected from the group consisting of CaCO₃, Al(OH)₃, kaolin, talc and SiO₂. In a preferred embodiment, the filler comprises one or more selected from CaCO₃ and Al(OH)₃ (also known as ATH). In a preferred embodiment, the filler comprises CaCO₃.

In one embodiment, the amount of filler with respect to the total weight of the fiber composite material is 1 wt% or more, preferably 3 wt% or more, more preferably 5 wt% or more. Further, the amount of filler with respect to the total weight of the fiber composite material may be 50 wt% or less, preferably 40 wt% or less, preferably 30 wt% or less, more preferably 20 wt% or less, even more preferably 10 wt% or less.

### b) Thickening agent (d)

In one embodiment, the fiber composite material further comprises (d) a thickening agent.

In one embodiment, the thickening agent (d) comprises one or more selected from the group consisting of MgO, CaO, Mg(OH)₂ and Ca(OH)₂. In a preferred embodiment, the thickening agent comprises MgO. A specific example of thickening agent is Luvatol MK 35 (Lehmann & Voss & Co).

In one embodiment, the amount of thickening agent with respect to the total weight of the fiber composite material is 1 wt% or more, preferably 3 wt% or more, more preferably 5 wt% or more. Further, the amount of thickening agent with respect to the total weight of the fiber composite material may be 40 wt% or less, preferably 30 wt% or less, more preferably 20 wt% or less, even more preferably 10 wt% or less.

### c) Other additives (e)

In one embodiment, the fiber composite material further comprises one or more further additives (e) selected from curing agents, flame retardant additives, UV stabilizers, antioxidants, mold release agents, pigments, and any combination thereof.

In a preferred embodiment, the fiber composite material includes a curing agent. Preferred curing agents are organic peroxides, such as diacyl peroxides, peroxy esters, dialkyl peroxides, peroxyacetals, or azo compounds, or any combination thereof, preferably said curing agent including azobisisobutyronitrile (AIBN), benzoyl peroxide, and/or methyl ethyl ketone peroxide (MEKP). Specific examples of curing agents are Peroxan BEC (Pergan GmbH; tert-Butyl peroxy 2-ethylhexyl carbonate) and Peroxan BCC (Pergan GmbH; Di-(4-tert-butyl-cyclohexyl)-peroxydicarbonate).

In a preferred embodiment, the fiber composite material does not comprise pMMA.

In a preferred embodiment, the fiber composite material includes a mold release agent. Examples thereof include metal stearates, surfactants and polymers. A specific example of a mold release agent is BYK P-9085 (BYK Additives; mixture of surface-active substances and polymers).

Preferably, the total amount of additives (e) is contained in amount of at most 40 wt% relative to the total weight of the fiber composite material, preferably at most 30 wt%, more preferably at most 20 wt%, and even more preferably at most 10 wt%.

### 6.1.6 Preferred embodiments

In a first preferred embodiment, the present invention relates to a fiber composite material, which is a sheet molding compound comprising:
(a) a styrene-maleic anhydride copolymer (SMA) and/or at least partially imidized SMA copolymer (SMI) in an amount of 25 wt% or more, preferably 30 wt% or more, with respect to the total weight of the fiber composite material;
(b) a fiber material comprising a discontinuous glass fiber material, wherein an average length of the fiber material is 25 mm or more and the amount of fiber material is 20 wt% or more, preferably 30 wt% or more, with respect to the total weight of the fiber composite material;
(c) a filler comprising CaCO₃, wherein the amount of filler is 1 wt% or more with respect to the total weight of the fiber composite material, and
(d) a thickening agent comprising MgO, wherein the amount of thickening agent is 1 wt% or more with respect to the total weight of the fiber composite material.

In a second preferred embodiment, the sheet molding compound of the first preferred embodiment comprises (a) a covalently adaptable network comprising the SMA and/or SMI copolymer crosslinked with a crosslinking agent. The preferred features of this embodiment are as described above for the covalently adaptable network.

In a third preferred embodiment, the present invention relates to a B-stage material comprising the fiber composite material of the first or of the second embodiment and further comprising a first and a second carrier film, wherein the fiber composite material is present between the first and the second carrier film.

In a fourth preferred embodiment, the present invention relates to a fiber composite material, which is a bulk molding compound comprising:
(a) a styrene-maleic anhydride copolymer (SMA) and/or at least partially imidized SMA copolymer (SMI) in an amount of 25 wt% or more, preferably 30 wt% or more, with respect to the total weight of the fiber composite material;
(b) a fiber material comprising a discontinuous glass fiber material, wherein an average length of the fiber material is less than 25 mm, and the amount of fiber material is less than 35 wt%, with respect to the total weight of the fiber composite material;
(c) a filler comprising CaCO₃, wherein the amount of filler is 1 wt% or more with respect to the total weight of the fiber composite material, and
(d) a thickening agent comprising MgO, wherein the amount of thickening agent is 1 wt% or more with respect to the total weight of the fiber composite material.

In a fifth preferred embodiment, in the bulk molding compound of the fourth preferred embodiment, the average length of the fiber material is 0.1 mm or more and 20 mm or less, and the amount of fiber material is 10 wt% or more and less than 30 wt%.

Any of the preferred embodiments described above may further include any of the features and the amount ranges described above for the fiber composite material of the present invention.

### 6.1.7 Properties

Preferably, the fiber composite material has a flexural strength (FS) of at least 200 MPa, more preferably at least 300 MPa, more preferably at least 400 MPa, more preferably at least 500 MPa, more preferably at least 600 MPa, more preferably at least 700 MPa, and even more preferably at least 800 MPa. The flexural strength is measured according to ISO 14125.

Preferably, the fiber composite material has a flexural modulus of at least 15 GPa, more preferably at least 16 GPa, more preferably at least 17 GPa, more preferably at least 18 GPa, more preferably at least 19 GPa, more preferably at least 20 GPa, more preferably at least 21 GPa, more preferably at least 22 GPa, more preferably at least 23 GPa, more preferably at least 24 GPa, more preferably at least 25 GPa, and even more preferably at least 26 GPa. The flexural modulus is measured according to ISO 14125.

Preferably, the fiber composite material has flexural strain at failure of at least 2%, more preferably at least 2.5%, and even more preferably at least 3%. The flexural strain at failure is measured according to ISO 14125.

Preferably, the fiber composite material is recyclable. Preferably, at least 60 wt% of the material are recoverable according to the method for recycling disclosed below, preferably at least 70 wt%, more preferably at least 80 wt%, more preferably at least 90 wt%, and even more preferably at least 95 wt%.

Herein, the recoverable material includes the fiber material, the SMA and/or SMI copolymer, and the filler.

The preferred method for recycling the fiber composite material is further described below.

### 6.2 Molded article

The present invention further relates to a molded article obtainable by molding a fiber composite material according to the present invention. The preferred features of the fiber composite material are as described above.

The molded article may be obtained by compression molding or by injection molding.

The molded article may be any of electronics equipment, aerospace materials, wind turbines, casings, marine structures, pipe and tank, construction structures, transportation, defense materials, consumer goods, circuit boards, battery casings, pressurized tanks, and/or structural profiles used in construction industry.

### 6.2.1 Molded article obtainable from sheet molding compound

In one embodiment, the molded article is obtainable from the fiber composite material according to the present invention, wherein the fiber composite material is a sheet molding compound.

Preferably, in this embodiment, the molded article is obtainable by compression molding.

The compression molding may be performed as known in the art, for example by using a molding press. The sheet molding compound is placed in the cavity of the molding press, then the mold is closed, thereby compressing, spreading and curing the sheet molding compound.

The molded article is furthermore obtainable from the B-stage material according to the present invention by molding, preferably by compression molding, the sheet molding compound after removing the first and the second carrier film of the B-stage material.

### 6.2.2 Molded article obtainable from bulk molding compound

In one embodiment, the molded article is obtainable from the fiber composite material according to the present invention, wherein the fiber composite material is a bulk molding compound.

Preferably, in this embodiment, the molded article is obtainable by compression molding or injection molding, more preferably by compression molding.

The compression molding may be performed as described above for the sheet molding compound.

The injection molding may be performed as known in the art. For example, the bulk molding compound may be fed through a feed section of an injection molding machine and injected into a mold cavity. The mold is closed, thereby compressing, spreading and curing the bulk molding compound.

### 6.3 Method for obtaining fiber composite material

The present invention further provides a method for obtaining a fiber composite material according to the present invention. The method comprises the steps of:
(i) providing a resin paste (30, 31) containing (a) the SMA and/or SMI copolymer and styrene;
(ii) providing a fiber material (b) (40, 41); and
(iii) obtaining a fiber composite material (60, 61) comprising (a) and (b) by a sheet molding compound process or by a bulk molding compound process.

### 6.3.1 Providing a resin paste (step (i))

Step (i) is a step of providing a resin paste (30, 31) containing (a) the SMA and/or SMI copolymer and styrene. The features of the copolymer are as described above.

The styrene is thus used as a solvent to dissolve the SMA and/or SMI. Since the styrene is curable, it may also be referred to as a "curable solvent" or a "reactive solvent".

Optionally, the reactive solvent also comprises maleic anhydride as described above, and/or any of the additives (fillers, thickening agents, curing agents, etc.) described above.

The resin paste may be prepared by adding the SMA and/or SMI copolymer to styrene.

In step (i), a step of pre-stirring the resin may be included, wherein the resin mixture is stirred to prepare a paste, for example at up to 2000 rpm.

Further, in step (i), a step of pre-mixing the resin may be included, wherein additives such as fillers and release agents are added to the resin paste and mixed into the resin paste.

After the step of pre-mixing, additional agents such as initiators and thickening agents may be added.

The resin paste may be stirred for a predetermined duration, for example between 2 minutes and 10 minutes. Preferably, the temperature of the resin paste during stirring and mixing does not exceed 30°C.

### 6.3.2 Providing a fiber material (step (ii))

The features of the fiber material (40, 41) may be as described above for the fiber material contained in the fiber composite material of the present invention.

### 6.3.3 Obtaining a fiber composite material by sheet molding

### compound process (step (iii))

In one embodiment, step (iii) comprises obtaining a fiber composite material (60) comprising (a) and (b) by a sheet molding compound process.

That is, in one embodiment the method for obtaining a fiber composite material according to the present invention is a sheet molding compound process for obtaining the sheet molding compound according to the present invention, wherein step (iii) comprises the following steps:
(i') applying the resin paste (30) provided in step (i) onto a first carrier film (10) and onto a second carrier film (20);
(ii') applying the fiber material (40) provided in step (ii) onto the resin paste (30) applied onto the first carrier film (10) in step (i'); and
(iii') contacting the resin paste (30) and fiber material (40) applied onto the first carrier film (10) and the resin paste (30) applied onto the second carrier film (20), thereby forming a sheet molding compound (60) between the first and the second carrier film.

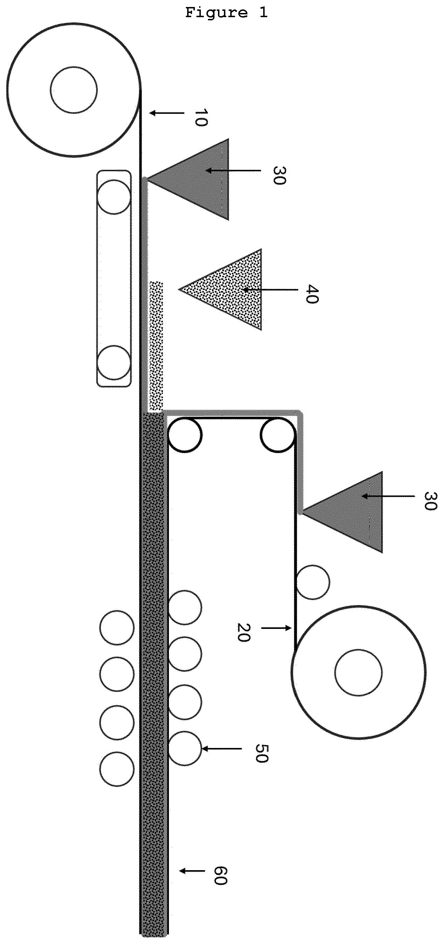

The sheet molding compound process according to this embodiment is schematically illustrated in Figure 1.

In step (i'), a resin paste (30) containing (a) the resin paste provided in step (i) is applied onto a first carrier film (10) and onto a second carrier film (20).

In this step, the resin may be manually applied into a resin box. The amount of resin paste applied may be controlled with a doctor box. Depending on the fiber content and on the filler load, the doctor box gap, that is, the distance between the doctor blade and the film, may be adjusted between 1.2 mm and 1.4 mm.

In this process, the resin film height may be measured, for example by white light microscopy.

In step (i'), the temperature of the doctor box and blade temperature may be kept at room temperature, for example at 20°C to 25°C.

As mentioned above, resin paste provided in step (i') may further contain any one or more of the additional components as described above for the components of the fiber composite material of the present invention.

In step (ii'), the fiber material (40) is applied onto the resin paste which has been applied onto the first carrier film (10).

In step (ii'), a first impregnation zone may have a depth of about 45% and a second impregnation zone may have a depth of 55%. The impregnation zone refers to the area in which the fiber material is applied to the thermosetting resin paste. That is, the impregnation zone refers to the area where the resin is mixed and impregnated with the fiber material. In the process according to the claimed invention, two independent impregnation zones may be present, each with an independent impregnation zone depth. The impregnation zone depth refers to the depth to which the fiber material penetrates into the resin.

The temperature at which step (ii') is carried out may be room temperature, for example between 20°C and 25°C.

Step (iii') comprises contacting the resin paste (30) and fiber material (40) applied onto the first carrier film (10) and the resin paste (30) applied onto the second carrier film (20), thereby forming a B-stage material including the fiber composite material, wherein the fiber composite material is a sheet molding compound (60) and the B-stage material comprises the fiber composite material between the first and the second carrier film.

That is, steps (i') to (iii') result in the B-stage material described above, that is, in a B-stage material comprising a first carrier film and a second carrier film, wherein the fiber composite material according to the present invention is present between the two carrier films. Accordingly, the method according to this embodiment may be a method for forming a B-stage material comprising the fiber composite material according to the present invention.

In the step (iii') of contacting the resin paste applied onto each carrier film, the sheet molding compound may be formed by compacting the first and second carrier films with compacting rolls (50).

Optionally, the method may comprise a step of rolling the B-stage material via rolls and/or rollers, optionally followed by cutting the B-stage material into pieces and stacking the pieces.

Optionally, the method may comprise a step of converting the B-stage material and removing the two carrier films, thereby obtaining a fiber composite material which is a sheet molding compound.

In one embodiment, the present invention relates to a method for obtaining a B-stage material including the steps (i) to (iii) described above, wherein step (iii) includes steps (i') to (iii') as described above. In one embodiment, the present invention relates to a method for obtaining a fiber composite material including the steps (i) to (iii) described above, wherein step (iii) includes steps (i') to (iii') as described above, wherein step (iii') further includes removing the two carrier films.

Optionally, the method of obtaining a sheet molding compound as described above may be part of a method of obtaining a molded article as described above for the molding article of the present invention, wherein the method further comprises removing the carrier films, followed by molding and curing the molding compound, thereby obtaining a molded article. The molding may be a compression molding process as described above for the molded article.

The features of the sheet molding compound and of its components are as described above for the fiber composite material of the present invention.

In one embodiment, the fiber composite material of the present invention is a sheet molding compound obtainable by the method described above.

In one embodiment, the molded article of the present invention is a molded article obtainable by the method described above.

### 6.3.4 Obtaining a fiber composite material by bulk molding compound process

In one embodiment, step (iii) comprises obtaining a fiber composite material comprising (a) and (b) by a bulk molding compound process.

That is, in one embodiment the method for obtaining a fiber composite material according to the present invention is a bulk molding compound process for obtaining the bulk molding compound (61) according to the present invention, wherein step (iii) comprises the following.

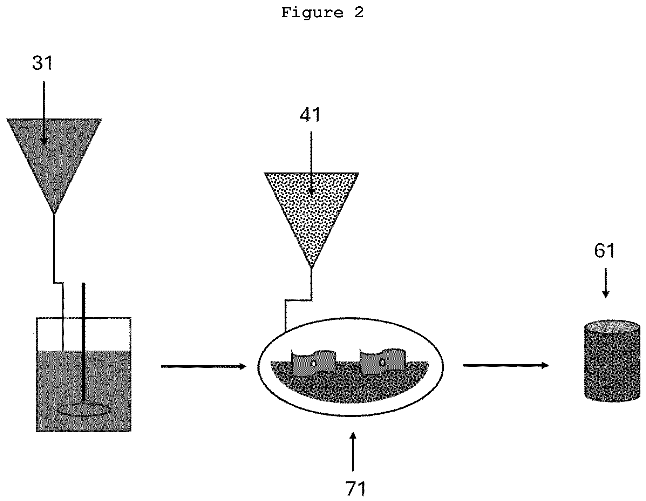

The bulk molding compound process is schematically illustrated in Figure 2.

In the bulk molding compound process, the step (iii) comprises mixing the resin paste (31) provided in step (i) with the fiber material (41) provided in step (ii) with a stirrer or with a kneader, thereby obtaining a bulk molding compound.

As mentioned above, the resin paste (31) may further contain any one or more of the additional components as described above for the components of the fiber composite material of the present invention.

The mixing may be performed with a kneader (71) selected from a Z-arm type kneader and a kneader with a sigma type blade or sigma type blades.

The mixing time may be 5 minutes or more, 8 minutes or more, 10 minutes or more, or 15 minutes or more. Further, the mixing time may be 120 minutes or less, or 90 minutes or less, or 60 minutes or less, or 30 minutes or less.

The mixing may be performed at a temperature of 18°C or more, 20°C or more, 25°C or more, and/or may be performed at a temperature of 150°C or less, 100°C or less, 80°C or less, or 60°C or less.

Optionally, the method of obtaining a bulk molding compound as described above may be part of a method of obtaining a molded article as described above for the molding article of the present invention, wherein the method further comprises molding and curing the molding compound, thereby obtaining the molded article. The molding may be a compression or injection molding process as described above for the molded article.

The features of the bulk molding compound and of its components are as described above for the molding compound of the present invention.

In one embodiment, the molding compound of the present invention is a bulk molding compound obtainable by the method described above.

In one embodiment, the molded article of the present invention is a molded article obtainable by the method described above.

### 6.4 Use of the copolymer

The present invention relates to the use of a styrene-maleic anhydride copolymer (SMA) and/or at least partially imidized SMA copolymer (SMI) to produce a sheet molding compound or a bulk molding compound.

Typical materials used in the conventional SMC and BMC process are not recyclable. The present inventors have found that the SMA and/or SMI copolymers can be successfully used in a SMC and/or in a BMC process, thereby allowing for the production of fiber composite materials and, subsequently, molded articles having excellent thermomechanical resistance and strong mechanical performance, while at the same time being recyclable.

### 6.5 Method of recycling a SMA and/or SMI copolymer and a fiber material

The present invention further relates to a method of recycling the fiber composite material according to the present invention, the method comprising the steps of
(i) contacting the fiber composite material with a solvent selected from any of acetone, methyl ethyl ketone, tetrahydrofuran, cyclohexanone, dimethylformamide (DMF), dimethylsulfoxide (DMSO), N-methyl pyrrolidone (NMP), dichloromethane (DCM), chloroform, toluene, ethyl benzene, ethyl acetate, or combinations thereof.
(ii) filtering out the fiber material, and
(iii)drying the filtrate to recover dissolved SMA and/or SMI and polystyrene.

The definitions of terms provided above for the fiber composite material apply *mutatis mutandis* to the third aspect.

Dissolving the matrix of the fiber composite material may further be effected through any of heating, mixing, ultrasonic cavitation, or the addition of further solvation aids, such as detergents.

Through the method of recycling outlined above, both the fiber material and the SMA and/or SMI can be recovered. Preferably, at least 60 wt% of the fiber composite material are recoverable, more preferably at least 70 wt%, more preferably at least 80 wt%, more preferably at least 90 wt%, and even more preferably at least 95 wt%.

Recoverable material includes the fiber material, the SMA and/or SMI and/or polystyrene, and the filler. Recovered fiber material may be re-used in a similar process, such as making new fiber composite materials. Similarly, recovered SMA and/or SMI may be re-used.

### 6.6 Use of the fiber composite material

The present invention relates to a use of the fiber composite material according to the present invention in an article, preferably said article being any of electronics equipment, aerospace materials, wind turbines, casings, marine structures, pipe and tank, construction structures, transportation, defense materials, consumer goods, circuit boards, battery casings, pressurized tanks, and/or structural profiles used in construction industry.

The definitions of terms provided above apply *mutatis mutandis* to this aspect.

### 6.7 Example

The present invention is exemplified by the following, nonlimiting example.

The following methods of characterization were used throughout the example: the flexural strength, flexural modulus and flexural strain at failure were determined according to ISO 14125. The total glass fiber content in the composite was determined using thermogravimetric analysis as the residual mass at 600°C.

The materials used for the manufacture of a molded article according to the present invention are listed in Table 1 below.

Different formulations (Formulations 1-5) were prepared with the components and amounts reported in Table 2 below.

The mixing order was as follows: SMA was first dissolved in styrene, then an internal mold release agent (BYK 9085) and a thickening agent (Luvatol MK 85) were added to form a base resin paste. The additional components (peroxide initiator and the filler) were subsequently added.

The resin paste was pre-stirred with Dispermat (VMA Gretzmann) stirrer with a stirring speed of up to 2000 rpm. The paste temperature was kept below 30°C.

**Table 1.**

| **Function** | **Material** | **Manufacturer** | **Description** |
|---|---|---|---|
| (a) Copolymer | SMA/SMI copolymer | Nouryon | Xibond 160 |
| (b) Fiber material | Glass fiber | - | Chopped glass fibers; average length: 25 mm |
| (c) Filler | OMYA Milicarb OG 30120 | Omya | CaCO₃ |
| (d) Thickening agent | Luvatol MK 35 | Lehmann & Voss & Co | 35% MgO on an unsaturated polyester resin |
| (e) Additive (initiator) | Peroxan BEC | Pergan GmbH | tert-Butyl peroxy 2-ethylhexyl carbonate 97%, Liquid; CAS: 34443-12-4 |
| (e) Additive (initiator) | Peroxan BCC | Pergan GmbH | Di-(4-tert-butyl-cyclohexyl)-peroxydicarbonate 95%, Powder; CAS: 15520-11-3 |
| (e) Additive (Mold release agent) | BYK P-9085 | BYK Additives | Mixture of surface-active substances and polymers |

**Table 2.**

| **Formulation** | **(a) Copolymer (g / 100 g copolymer)** | **(b) Fiber weight fraction (g / 100 g copolymer)** | **(c) Filler (g / 100 g copolymer)** | **(d) Thickening agent (g /100 g copolymer)** | **(e) Initiator** | **(e) Mold release agent (g / 100 g copolymer)** |
|---|---|---|---|---|---|---|
| 1 | SMA copolymer (100) | 50 | CaCO₃ (0) | Luvatol MK 35 (1.8) | BEC | BYK P-9085 (2) |
| 2 | SMA copolymer (100) | 50 | CaCO₃ (0) | Luvatol MK 35 (1.8) | BCC | BYK P-9085 (2) |
| 3 | SMA copolymer (100) | 30 | CaCO₃ (100) | Luvatol MK 35 (1.8) | BCC | BYK P-9085 (2) |
| 4 | SMA copolymer (100) | 30 | CaCO₃ (20) | Luvatol MK 35 (1.8) | BEC | BYK P-9085 (2) |
| 5 | SMA copolymer (100) | 30 | CaCO₃ (20) | Luvatol MK 35 (1.8) | BCC | BYK P-9085 (2) |

The thus obtained resin paste was applied on two carrier films made of polyethylene running on a Schmidt & Heinzman Cube 1600 SMC machine (1 m/minute, area weight 2.5 kg/m²). The process was carried out at room temperature.

Reinforcing fibers (chopped glass fibers, having an average length of 25 mm) were scattered on the resin paste that was running on the first of the carrier films. Subsequently, the resin paste and fiber material applied onto the first carrier film and the resin paste applied onto the second carrier film were contacted, thereby forming a fiber composite material between the two carrier films. The product obtained was a B-stage product that was collected and converted into a roll.

For the further processing, the carrier films were removed and the fiber composite material was compressed in a SMC plate mold (457 mm x 457 mm cavity dimensions; cavity surface temperature 95°C to 150°C; delta of approx. 3 to 5 K between upper and lower mold half) to obtain a molded article. The parameters of the molding process are reported in Tables 3 and 4 below.

**Table 3.**

| **Profile: Closing** | |
|---|---|
| Position (mm) | Speed (mm/s) |
| 50 | 20 |
| 35 | 10 |
| 15 | 4 |
| 10 | 2 |
| 0 | 2 |

**Table 4.**

| **Profile: Molding (initial profile)** | |
|---|---|
| Time (s) | Force (kN) |
| 0 | 1300 |
| 900 | 1300 |
| 902 | 0 |

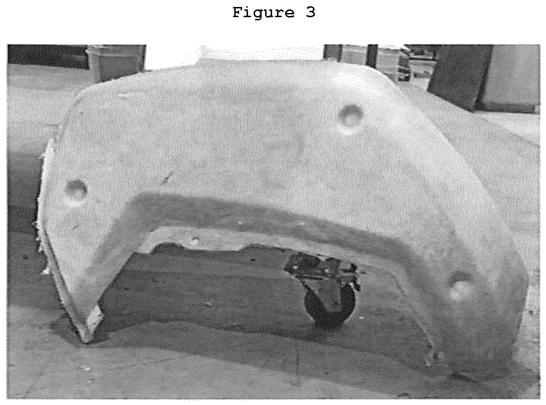

The article obtained from the molding of Formulation 4 is shown in Figure 3. That is, with the formulation according to the present invention it was possible to successfully obtain a sheet molding compound containing a fiber composite material based on an SMA copolymer, which is accordingly recyclable while at the same time achieving optimal mechanical and strength properties that render it suitable for a variety of structural and industrial applications.

## Claims

1. A fiber composite material comprising:
(a) a styrene-maleic anhydride copolymer (SMA) and/or at least partially imidized SMA copolymer (SMI), and
(b) a fiber material,
wherein the fiber composite material is a sheet molding compound (SMC) or a bulk molding compound (BMC).

2. The fiber composite material according to claim 1, further comprising:
(c) a filler, and/or
(d) a thickening agent.

3. The fiber composite material according to claim 2, wherein the filler (c) comprises one or more selected from the group consisting of CaCO₃, Al(OH)₃, kaolin, talc, and SiO₂, and/or wherein the thickening agent (d) comprises one or more selected from the group consisting of MgO, CaO, Mg(OH)₂ and Ca(OH)₂.

4. The fiber composite material according to any one of claims 1 to 3, wherein the fiber composite material comprises (a) a covalently adaptable network comprising the SMA and/or SMI copolymer crosslinked with a crosslinking agent; preferably wherein the crosslinking agent is a polyol, a polyamine, a polythiol, or an agent having mixed functionality of any of the above, preferably a polyol.

5. The fiber composite material according to any one of claims 1 to 4, wherein the fiber material (b) is selected from glass fiber material, carbon fiber material, aramid fiber material, basalt fiber material, and/or natural fiber material.

6. The fiber composite material according to any one of claims 1 to 5, wherein the fiber composite material is a sheet molding compound obtainable by a sheet molding compound technique comprising:
(i) providing a resin paste containing (a) the SMA and/or SMI copolymer and styrene;
(ii) applying the resin paste onto a first carrier film;
(iii) applying the resin paste onto a second carrier film;
(iv) applying the fiber material (b) onto the resin paste applied onto the first carrier film in step (ii); and
(v) contacting the resin paste and fiber material applied onto the first carrier film and the resin paste applied onto the second carrier film, thereby forming a fiber composite material between the first and the second carrier film.

7. The fiber composite material according to any one of claims 1 to 6, wherein the fiber composite material is a sheet molding compound, and
the amount of fiber material (b) with respect to the total weight of the fiber composite material is 20 wt% or more; and/or
wherein the average length of the fibers in the fiber material (b) is 10 mm or more.

8. A B-stage material comprising the fiber composite material according to any one of claims 1 to 7, wherein the fiber composite material is a sheet molding compound and the B-stage material further comprises a first and a second carrier film,
wherein the fiber composite material is present between the first and the second carrier film.

9. The fiber composite material according to any one of claims 1 to 5, wherein the fiber composite material is a bulk molding compound and is obtainable by a bulk molding compound technique comprising
(i) providing a resin paste containing (a) the SMA and/or SMI copolymer and styrene;
(ii) mixing the resin paste with the fiber material (b) with a stirrer or with a kneader, thereby obtaining a bulk molding compound.

10. The fiber composite material according to any one of claims 1 to 5 or claim 9, wherein the molding compound is a bulk molding compound and
wherein the amount of fiber material (b) with respect to the total weight of the fiber composite material is 50 wt% or less; and/or
wherein the average length of the fibers in the fiber material (b) is less than 2.5 cm.

11. A molded article obtainable by molding a fiber composite material according to any one of claims 1 to 10, preferably by compression molding or injection molding.

12. A method for obtaining a fiber composite material according to any one of claims 1 to 10, comprising the steps of:
(i) providing a resin paste (30, 31) containing (a) the SMA and/or SMI copolymer and styrene;
(ii) providing a fiber material (b) (40, 41); and
(iii) obtaining a fiber composite material (60, 61) comprising (a) and (b) by a sheet molding compound process or by a bulk molding compound process.

13. The method according to claim 12, wherein step (iii) comprises obtaining a fiber composite material by a sheet molding compound process, wherein the fiber composite material is a sheet molding compound comprising (a) and (b), the sheet molding compound process comprising the steps of:
(i') applying the resin paste (30) provided in step (i) onto a first carrier film (10) and onto a second carrier film (11);
(ii') applying the fiber material (b) (40) provided in step (ii) onto the resin paste (30) applied onto the first carrier film (10) in step (i'); and
(iii') contacting the resin paste (30) and fiber material (40) applied onto the first carrier film (10) and the resin paste (30) applied onto the second carrier film (20), thereby forming a sheet molding compound (60) between the first and the second carrier film.

14. The method according to claim 12, wherein step (iii) comprises obtaining a fiber composite material by a bulk molding compound process, wherein the fiber composite material is a bulk molding compound comprising (a) and (b), the bulk molding compound process comprising the step of
mixing the resin paste (31) provided in step (i) with the fiber material (b) (41) provided in step (ii) with a stirrer or with a kneader (71), thereby obtaining a bulk molding compound (61).

15. Use of a styrene-maleic anhydride copolymer (SMA) and/or at least partially imidized SMA copolymer (SMI) to produce a sheet molding compound or a bulk molding compound.
